# EUROPEAN PATENT SPECIFICATION

(11) **EP 2 864 191 B1**
(45) Date of publication and mention of the grant of the patent: **27.11.2019**
(21) Application number: 13807780.5
(22) Date of filing: 24.06.2013
(51) Int. Cl.: B63C 3/12, B60P 3/10, B63C 3/02, B60P 1/52, B62D 63/06, B62D 63/08, B65G 13/02, B65G 39/12, B65G 39/18

(54) **A LOADING MECHANISM**
LADEMECHANISMUS
MÉCANISME DE CHARGEMENT

(30) Priority: 23.06.2012 NZ 59742212; 13.12.2012 NZ 60453012
(43) Date of publication of application: 29.04.2015
(73) Proprietor: Balex Marine Development Limited, Hong Kong (HK)
(72) Inventor: BACON, Lex Noel, Hamilton 3204 (NZ)
(74) Representative: Appleyard Lees IP LLP
(86) International application number: PCT/NZ2013/000112
(87) International publication number: WO 2013/191570

(56) References cited:
- FR-A5- 2 182 348
- US-A- 3 917 087
- US-A- 3 917 087
- US-A- 4 363 590
- US-A- 4 363 590
- US-A- 4 592 694
- US-A- 4 717 165

## Description

### TECHNICAL FIELD

The present invention relates to a loading mechanism.

### BACKGROUND ART

Trailers are used to store and transport boats.

The loading and unloading of a boat onto the trailer is facilitated by rollers mounted on the trailer. The boat is moved over the rollers to move it onto or off from (load/unload) the trailer.

The simplest mechanical way to load or unload a boat is to push it. However, significant strength is required to move a heavy boat over rollers. This means that many boat users may struggle to push a boat so as to load and unload it from a trailer.

Winches are often used to drag boats out of the water, over rollers, and thereby onto the trailer. However, these can be fiddly to use. It is necessary to align the boat with the trailer and secure the winch rope to the front of the boat. This can be difficult to achieve. In addition, a boat user often gets wet which many people wish to avoid.

Furthermore, manual winches still require strength or effort to load the boat. Again, not all boat users possess sufficient strength to load the boat.

A further problem of many boat trailers is that these must be submerged in water in order for a boat to be loaded onto the trailer. Exposure of the trailer to water, and in particular salt water, can accelerate the rate of rusting of the trailer and its components.

US4363590A relates to a power operated boat loading/unloading marine trailer.

Automatic boat trailers are known and an example is described in PCT Application No, 2004/000667. The device disclosed by this patent includes a plurality of rollers spaced apart along a boat trailer's length, and located approximately in line with the centre line of the trailer. Those rollers are aligned along the centre of the trailer. The rollers are connected by a chain drive mechanism so that a motor can rotate all of the rollers. However, this arrangement requires that a person accurately aligns a boat with the rollers. This often can be logistically difficult to achieve. It can also result in the person getting wet - again something which may wish to be avoided.

A further issue with the boat trailer disclosed by PCT Application No. 2004/000667 is that the chain drive mechanism has exposed moving parts such as the drive chain. Those parts may be susceptible to rusting, which can be accelerated due to exposure to salt water or other damage.

That chain drive mechanism may also pose a safety risk due to the exposed/moving parts.

Yet a further problem of the boat trailer disclosed in this patent is that the rollers struggle to transfer sufficient force to the boat to efficiently move that onto and off from a trailer. This is a result of the position of the rollers, and that they are fixed with respect to the trailer.

A further type of boat trailer is disclosed by New Zealand Patent No. 547569. This includes a Y shaped frame with a draw bar to engage a corresponding coupling on a vehicle. A 'U' shaped frame sits inside and is pivotably mounted to the Y shaped frame. A pair of swivel arms is configured to move the U shaped frame so as to raise and lower a boat with respect to the Y shaped frame.

The device of New Zealand Patent No. 547569 was designed to facilitate launching of boats in shallow water. However, this type of boat trailer cannot easily be used with launching boats on inclined launching areas such as boat ramps.

Furthermore, the boat trailer of Patent No. 547569 requires submersion of the trailer in water. As discussed above, such submersion can lead to wear and tear or rusting of the components.

It is therefore an objective of the present invention to address the foregoing problems or at least to provide the public with a useful choice.

All references, including any patents or patent applications cited in this specification are hereby incorporated by reference. No admission is made that any reference constitutes prior art. The discussion of the references states what their authors assert, and the applicants reserve the right to challenge the accuracy and pertinency of the cited documents. It will be clearly understood that, although a number of prior art publications are referred to herein, this reference does not constitute an admission that any of these documents form part of the common general knowledge in the art, in New Zealand or in any other country.

Throughout this specification, the word "comprise", or variations thereof such as "comprises" or "comprising", will be understood to imply the inclusion of a stated element, integer or step, or group of elements integers or steps, but not the exclusion of any other element, integer or step, or group of elements, integers or steps.

It is an object of the present invention to address the foregoing problems or at least to provide the public with a useful choice.

Further aspects and advantages of the present invention will become apparent from the ensuing description which is given by way of example only.

### DISCLOSURE OF THE INVENTION

According to one aspect of the present invention there is provided a loading mechanism, including
a first roller assembly comprising at least one roller having a longitudinal axis;
a second roller assembly comprising at least one roller having a longitudinal axis;
at least one mounting configured to pivotally engage with the first roller assembly and second roller assembly so as to allow the orientation of the longitudinal axis of said at least one roller of the first roller assembly to change and to allow the orientation of the longitudinal axis of said at least one roller of the second roller assembly to change; and,
a drive mechanism, wherein the drive mechanism comprises:
a hydraulic drive motor connected to the at least one roller of the first roller assembly, and a second hydraulic drive motor connected to at least one roller of the second roller assembly
a hydraulic pump connected to the hydraulic drive motors,
wherein operation of the hydraulic pump causes the drive motors to rotate and thereby rotate the rollers of the first and second roller assemblies about their longitudinal axis to move an object, wherein
as the weight of the object applies pressure to the roller of at least one of the first and second roller assemblies the at least one mounting allows said rollers to move so as to change the angle between the longitudinal axis of the rollers of the first and second roller assemblies.

According to another aspect of the present invention there is provided a kitset of parts which when assembled provide said loading mechanism, including
a first roller assembly comprising at least one roller having a longitudinal axis;
a second roller assembly comprising at least one roller having a longitudinal axis;
at least one mounting configured to pivotally engage with the first roller assembly and the second roller assembly so as to allow the orientation of the longitudinal axis of said at least one roller of the first roller assembly to change and to allow the orientation of the longitudinal axis of said at least one roller of the second roller assembly to change; and,
a drive mechanism comprising a hydraulic drive motor, a second hydraulic motor and a hydraulic pump, and wherein the hydraulic drive motor is configured to be connected to the first roller assembly and the hydraulic pump, and the second hydraulic motor is configured to be connected to the second roller assembly and the hydraulic pump, and wherein in use operation of the hydraulic pump causes the hydraulic drive motor and second hydraulic drive motor to rotate to thereby rotate the rollers of the first and second roller assemblies about their longitudinal axis to move an object, wherein as the weight of the object applies pressure to the roller of at least one of the first and second roller assemblies the at least one mounting allows said rollers to move so as to change the angle between the longitudinal axis of the rollers of the first and second roller assemblies.

According to another aspect of the present invention, there is provided a loading method, wherein the method uses a loading mechanism,
the method including the steps of:
(a) engaging the drive mechanism to rotate the first and second roller assemblies so as to move the object, and wherein the weight of the object applies pressure to the roller of at least one of the first and second roller assemblies to cause said roller to move and thereby change the orientation between the longitudinal axis of the rollers of the first and second roller assemblies.

Throughout the present specification, reference to the term "loading mechanism" should be understood as meaning an assembly to move an object on to or off from a cradle.

The term "cradle" refers to a plurality of components that can support an object.

The cradle has a front end, a back end, and a center line extending along its length.

Reference to the terms "front end" and "backward end" are arbitrary, and made with reference to the normal direction of loading an object onto the cradle of a preferred embedment to the present invention. These references should not be seen as anyway limiting on the scope of the present invention.

The cradle may also include supplementary rollers. In-use these assist moving the object onto or off from the cradle. The supplementary rollers may also define the cradle.

In a preferred embodiment the present invention relates to a loading mechanism for objects with a width and/or shape which varies along its length.

In a particularly preferred embodiment the present invention relates to a loading mechanism for use in loading and unloading boats onto a cradle on a trailer. Accordingly, reference herein will be made to use of the loading mechanism with boats and trailers.

However, the foregoing should not be seen as limiting on the scope of the present invention. It is also envisaged that the loading mechanisms can be used with loading boats onto objects other than trailers such as a dry dock berth or non-trailer cradles.

It is also envisaged that the loading mechanisms according to the present invention may be utilised in applications such as loading and unloading of jet skis, or loading and unloading of heavy objects such as containers.

Preferably, the boats with which the present invention is used have a centre line. The boat is symmetrical (a mirror image) about the centre line. However, the boat's width and therefore its shape varies along the length of the boat. This is a common design feature of boats and is as should be understood by one skilled in the art.

Throughout the present specification reference to the term "roller assembly" should be understood as meaning rotatable components. In use, a roller assembly rotates so as to move a boat in a direction corresponding to the direction of rotation.

In a particularly preferred embodiment, the present invention includes at least two roller assemblies spaced apart across the width of a trailer so as to be on either side of the centre line of the cradle. Therefore, in-use the two roller assemblies are on either side of the centre line of a boat with which the loading mechanism is to be used.

The inventors have discovered that having roller assemblies which in use are on either side of the boat's centre line provides a number of advantages. For instance, the roller assemblies are better positioned to engage the boat's hull as the boat approaches the trailer. This enables the roller assemblies to act as an aligning mechanism, which moves the boat towards, or into, an optimum position. When the boat is in the optimum position the roller assemblies can better apply force to the boat to load that onto the trailer.

It is also envisaged that the present invention may include a plurality of roller assemblies spaced apart along the length of the trailer. Therefore the foregoing should not be seen as limiting on the scope of the present invention.

In a preferred embodiment a roller assembly may be a plurality of individual rollers. The rollers may be mounted on a common axle or otherwise coaxial with each other.

However, it is also envisaged that a roller assembly could be a single (integral) roller. Therefore the foregoing should not be seen as limiting on the scope of the present invention.

Throughout the present specification reference to the term "drive mechanism" should be understood as meaning a component that is configured to rotate a roller assembly.

In a preferred embodiment, the drive mechanism is configured to rotate the rollers at a rate of between 6 - 15 revolutions per minute, and more preferably 10 revolutions per minute.

The inventor has identified that this range of rotating rates for the rollers is particularly advantageous in ensuring that the present invention works successfully. Without being limited the inventors believes that these rates of rotation help to ensure that the rollers are better able to engage the boat hull surface to transfer force to the boat hull (which is necessary to move the boat). If the rollers rotate too quickly then they slip over the boat hull. If the rollers rotate to slowly then the time taken to load and unload the boat onto the trailer is too long.

It should also be appreciated that the roller diameter has an effect on the rate of rotation required to move a boat onto and off from the trailer within a useful timeframe. Accordingly, the forgoing should not be seen as limiting on the scope of the present invention.

In a preferred embodiment the drive mechanism includes a square drive.

Throughout the present specification reference to the term "square drive" should be understood as meaning a non-circular axle. In use, the axle is disposed in a correspondingly shaped aperture in a roller.

The inventor's have found that the square drive provides a particularly efficient way to transfer force from motors to the rollers. This is beneficial in helping to reduce the complexity of parts used in the drive assemblies and minimising the weight of the present invention. Further, the square drive may reduce slippage of the rollers on the axle which might occur using other configurations and arrangements.

The square drive system also helps the rollers to be held in spaced apart positions along the axle. This is beneficial in compensating for problems due to planing lines on a boat hull. As the rollers are spaced apart they may be better able to flex. This means that the roller can maintain contact with the hull which may help to transfer sufficient force to the hull to move the boat.

However, the foregoing should not be seen as limiting on the scope of the present invention and alternatives are envisaged.

Throughout the present specification reference to the term "mounting" should be understood as meaning a component to which one or more roller assembly is secured.

In a particularly preferred embodiment the present invention includes one mounting for each roller assembly.

The mounting assembly is configured to facilitate, or otherwise allow, the roller assemblies to move with respect to each other so as to change the orientation of the roller assemblies with respect to each other.

In a particularly preferred embodiment a mounting facilitates one or more roller assemblies pivoting by providing a pivot point between the roller assembly and the trailer.

However, this should not be seen as limiting as alternatives are envisaged. Those include a mounting formed by a track and guide assembly, in which a roller assembly slides through an arcuate path so as to change the orientation of the roller assemblies. This aspect of the present invention should become clearer from the following description.

Throughout the present specification reference to the term "orientation of at least two roller assemblies relative to each other" should be understood as meaning changing an internal axle of two axis, wherein each of the axis extend along the length of an axle of a roller assembly. However, the foregoing should not be seen as limiting on the scope of the present invention. Alternatives for assessing the orientation of the roller assemblies are envisaged.

In a particularly preferred embodiment, the mountings are configured to move the roller assemblies to a default position.

Throughout the present specification reference to the term "default position" should be understood as meaning a position for the roller assemblies at a given angle without any weight or pressure applied to them.

In a particularly preferred embodiment in the default position the roller assemblies form a "V" when viewed along the length of the trailer. That shape helps the roller assemblies to engage the forward part (bow) of a boat hull, and thereby may improve the present invention's effectiveness at loading a boat onto a trailer.

In a preferred embodiment, in the default position the internal angle of the "V" between the rollers is in the range of substantially 40° - 50°, and more preferably substantially 45°.

In a preferred embodiment the mountings are configured to allow the roller assemblies to pivot so that the angle between the roller assemblies is substantially 180° e.g. the rollers/axles are substantially parallel. This range of motion helps the roller assemblies to maintain contact with the boat hull as it moves onto or off from the trailer. Therefore the range of motion helps to account for changes in the shape or width of the boat, and thereby may improve the present invention's efficiency.

In addition, the roller assemblies may be better able to transfer force to the boat hull e.g. there is a greater contact between the surface of the roller assembly and the boat hull than would have occurred were the roller assemblies held in a fixed position with respect to each other.

The inventors have also found that the preferred range of angles is useful to facilitate use of the present invention with a range of different boats differing in the shape and configuration of their respective hulls.

However, the foregoing should not be seen as limiting on the scope of the present invention.

In a preferred embodiment, rollers according to the present invention have a tread on their contact surface.

The tread may improve the roller's ability to grip a boat hull and therefore transfer force to the boat hull to move this on to or off from the cradle.

In addition, the tread provides channels to facilitate moving of water. This feature may also assist in the rollers maintaining contact with and transferring force to the boat hull. The function of the tread is similar to the function of a tread in vehicle tires as should be known to one skilled in the art.

However, the inventors have surprisingly found that use of rollers having a tread is particularly beneficial to function of the loading mechanism according to the present invention. This is surprising as existing industry wisdom is that rollers should preferably be smooth.

However, the foregoing should not be seen as limiting on the scope of the present invention, and it is also envisaged that rollers according to the present invention preferably have a substantially cylindrical shape. The rollers therefore have a long and round contact surface. That surface can help in smoothly loading a boat onto or off from a trailer by providing a large contact surface which can abut a boat hull.

In a particularly preferred embodiment the rollers may have an overhang.

Reference through the present specification to the term "overhang" should be understood as meaning that the contact surface of the roller is wider than the main body of the roller. This enables the rollers to flex or deform when under pressure in use. Therefore the roller may be able to wrap around, or deform to account for, features of shape in the boat hull. For instance, many boats have planning lines, being ridges extending along the boat's length. That the roller can flex enables it to maximise the surface area of the roller in contact with boat hull. This helps to maximise the transfer of rotational force to the boat hull and may improve the present invention's efficiency.

However, the foregoing should not be seen as limiting on the scope of the present invention and alternatives are envisaged including rollers that have a uniform cross section, are solid, or where the main body is wider than the contact surface.

In a preferred embodiment where the rollers have a tread they are formed from a material having a shore hardness in the range of substantially 40 to 80.

In a particularly preferred embodiment where the rollers have a tread are made from a material having a shore hardness of substantially 45.

The inventors have identified that the hardness of the materials from which the rollers are made can have a significant effect on the invention's effectiveness. It is believed that this is because the rollers need to be resilient enough to transfer the force of rotation to the boat hull. However, the rollers must also be able to deform to the shape of the boat hull and therefore cannot be too hard.

Alternatively, if the roller is too soft then it is likely to be ripped or damaged through contact with the boat hull.

It is also envisaged that in embodiments where the rollers have a smooth cylindrical contact surface that they made be made from a material having a shore hardness in the range of substantially 50 to 80, or more preferably substantially 70.

However the foregoing should not be seen as limiting on the scope to the present invention as the rollers can be made from materials having a hardness outside of the preferred range.

It is also envisaged that the rollers could be made from a composite of two or more materials. In such an embodiment the contact surface may have a hardness in the range described herein, whereas the main body of the roller may be outside of that range.

It should be appreciated from the foregoing that the present invention provides a number of advantages over the prior art. These may include any or all of the following:
- The kit set may be easily retrofitted to an existing trailer.
- The movement of the rollers relative to each other as they rotate so as to move a boat helps to keep the rollers in contact with the boat's hull. Therefore the present invention is better able to transfer force to the boat and is better able to move them.
- Is better able to automatically load and unload a boat, and can handle the increase in weight as the boat leaves the water.
- Provides a self aligning mechanism to maneuver a boat into a position in which it can be loaded onto the trailer.
- Is cost effective to manufacture.
- Reliable.
- Easily accounts for different boat hull shapes and can therefore be used with a variety of different boats.

### BRIEF DESCRIPTION OF DRAWINGS

Further aspects of the present invention will become apparent from the following description which is given by way of example only and with reference to the accompanying drawings in which:
- Figure 1A: is a front perspective view of a trailer incorporating a loading mechanism according to the present invention in the default position;
- Figure 1B: is a rear perspective view of Figure 1A;
- Figure 2A: is a perspective view of a loading mechanism according to the present invention;
- Figure 2B: is a view of Figure 2A with the roller assemblies in a different position to Figure 2A;
- Figures 3A - 3D: are schematics showing loading of a boat onto a trailer using a loading mechanism according to the present invention;
- Figure 4A - 4C: are end on views of schematics showing Figure 3;
- Figure 5A: is an end perspective view of a roller according to the present invention;
- Figure 5B: is an end on view of Figure 5A;

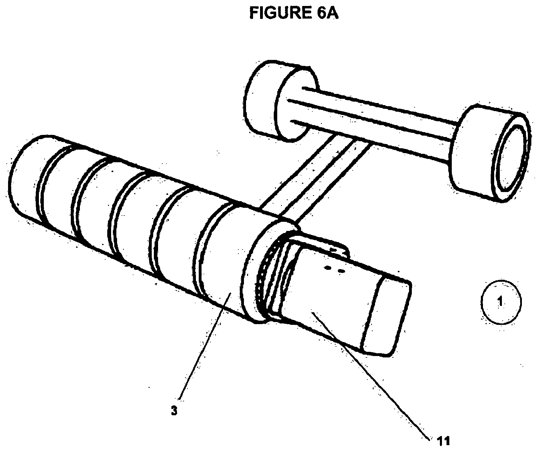

- Figure 6A: is a first close up perspective view of a section of loading mechanism;

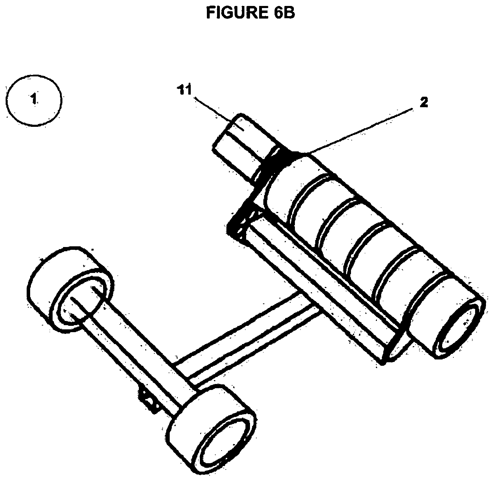

- Figure 6B: is a second close up perspective view of the section of a loading mechanism shown in Figure 6A.

### BEST MODES FOR CARRYING OUT THE INVENTION

Aspects of the present invention have been described by way of example only and it should be appreciated that modifications and additions may be made thereto without departing from the invention as defined in the claims.

There is provided a loading mechanism generally indicated as (1). The loading mechanism (1) is secured to a boat trailer (1A).

The loading mechanism (1) may be sold as a kitset of parts including instructions on how to assemble the loading mechanism (1) to the boat trailer (1A). The instructions (not shown in the Figures) can include any or all of the steps discussed herein.

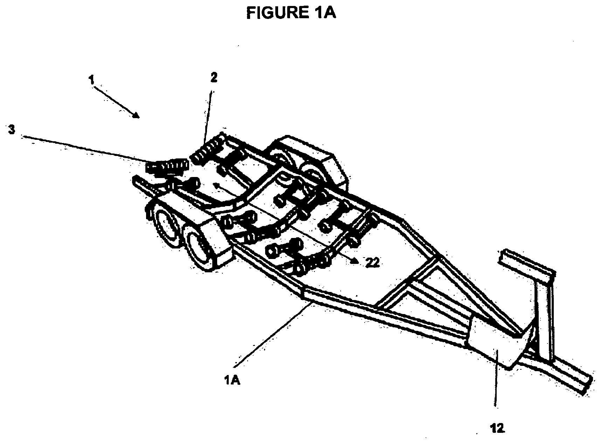

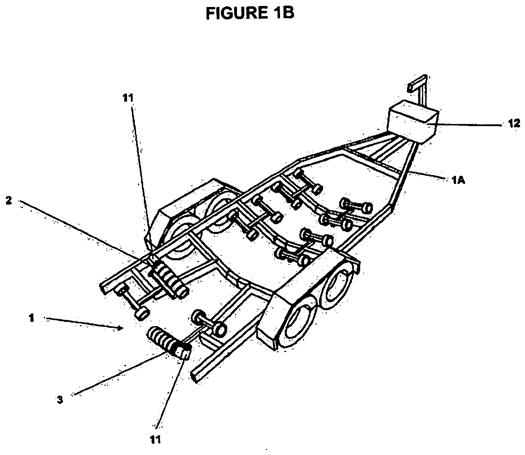

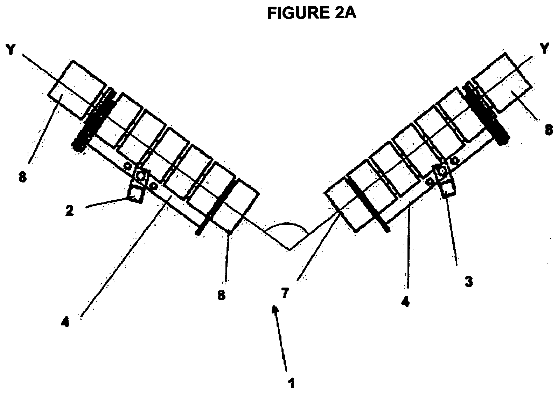

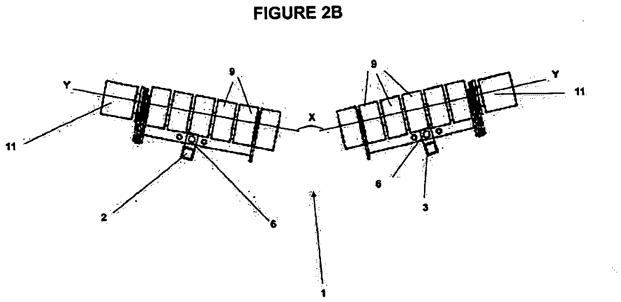

Referring first to Figures 1A, 1B, and Figures 2A, 2B.

The roller assemblies (2, 3) can pivot with respect to each other so as to change their orientation with respect to each other. In the embodiment shown in the Figures, the roller assemblies (2, 3) can pivot such that they are substantially parallel, with their axis (Y) aligned. This is important to roller assemblies (2, 3) transferring sufficient force to the boat (18) to move it onto or off from the trailer (1A).

The loading mechanism includes two roller assemblies (2, 3). Each of the roller assemblies (2, 3) are identical, and therefore only roller assembly (2) will be described. However, in the drawings, like references refer to like components.

Roller assembly (2) includes a mounting arm (4) which pivotally secures the roller assembly (2) to a trailer (5). The mounting arm (4) may be secured to a wobble roller mount as is known to one skilled in the art.

Roller assembly (2) is free to pivot about pivot point (6). The mounting arm is configured so that the weight of the roller assembly (2) causes it to pivot about pivot point (6) such that an inner end (7) of roller assembly (2) is lower than an outer end (8). Pivoting of the roller assemblies (2, 3) about pivot point (6) enables their orientation with respect to each other.

The orientation of the roller assemblies (2, 3) with respect to each other is best understood with reference to an imaginary axis indicated as (Y) in Figures 2A and 2B. The imaginary axis (Y) extends along the length of the axle (10).

The internal angle (X) between the axis (Y) of the roller assemblies (2, 3) changes as the roller assemblies (2, 3) pivot about pivot point (6).

Roller assembly (2) has a plurality of rollers (9) that are each mounted on an axle (10). The rollers (9) are spaced apart from each other along the length of axle (10).

Spacing the rollers (9) apart allows them to flex independently of each other. Therefore, the rollers (9) may be better able to accommodate changes in shape of the boat hull (20), or plaining lines (23) which the rollers (9) may touch when moving a boat onto or off from a trailer (1A).

In addition, the rollers (9) are able to be easily cleaned. This can prevent damage to the rollers (9) by particulate matter (grit) or rusting caused by salt water.

A drive motor (11) is secured to mounting arm (4) and operatively coupled to an axle (10). In use, the drive motor (11) rotates and thereby causes the axle (10) to rotate. This in turn rotates rollers (9) - as will be discussed below.

Drive motors (11) are connected to a hydraulic pump (12) which is mounted on the trailer (1A).

An electric motor (not shown) is mounted to the trailer and a battery (not shown). The battery provides a power source to drive rotation of the electric motor.

The electric motor (not shown) drives hydraulic pump (12).

Hydraulic pump (12) is connected to drive motors (11) in parallel. Therefore, hydraulic pump (12) applies equal driving force to drive motors (11).

The connection of hydraulic pump (12) to drive motors (11) is such that it can control rotation of drive motors (11) in a clockwise or anticlockwise direction. This enables the drive motors (11) to rotate the axles (10), and thereby the roller assemblies (2, 3), in either a clockwise or anticlockwise direction.

A remote (not shown) is able to communicate with hydraulic pump (12) and send signals which cause the pump (12) to engage and disengage. The remote can also tell hydraulic pump (12) which direct in to rotate roller assemblies (2,3). This allows a user to control rotation of roller assemblies (2, 3).

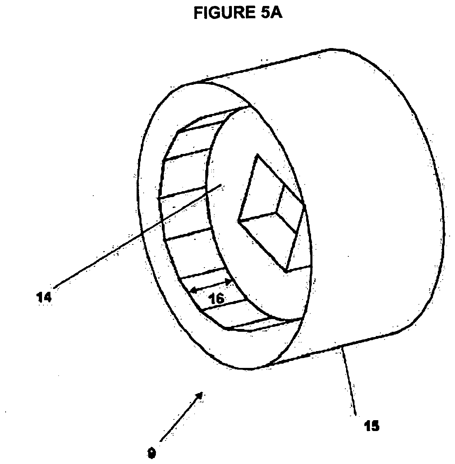

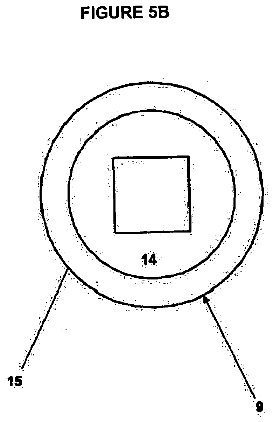

Referring now to Figures 5A and 5B which show features of one embodiment of the rollers (9).

The rollers (9) shown in Figures 5A and 5B have a substantially cylindrical shape. Each roller is made from polyurethane has a shore hardness of substantially 70.

Each roller (9) has a central main body (14) and a contact surface (15). The contact surface (15) is longer than the main body (14). This provides an overhang indicated by (16) whereby the contact surface (15) extends beyond the dimensions of the main body (14).

It is also envisaged that each roller (9) can have a shape and configuration generally similar to a type, having a tread on a contact surface of the roller (9).

### In Use

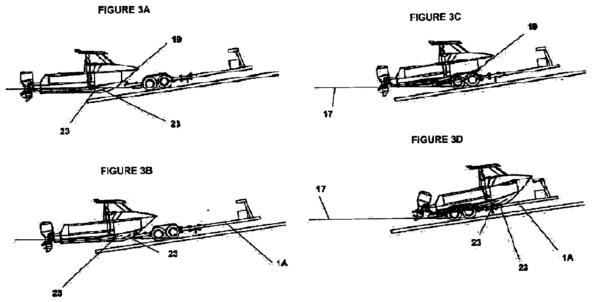

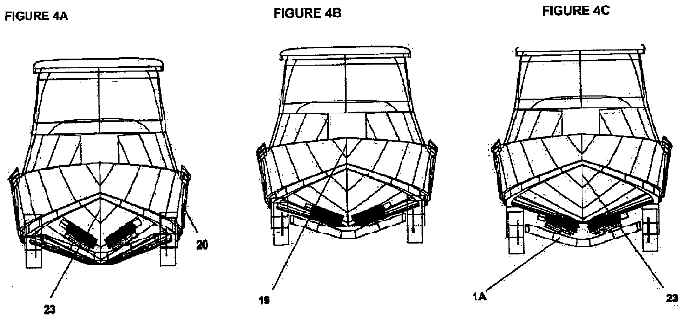

Referring now to Figures 3 and 4.

A vehicle (not shown) is used to position trailer (1A) with respect to a body of water (17).

Remote (not shown) is used to engage drive mechanism so that hydraulic pump (12) rotates drive motors (11). This in turn causes roller assemblies (2, 3) to rotate.

A boat (18) is moved so that bow (19) approaches loading mechanism (1).

One or both of roller assemblies (2, 3) abut boat hull (20) on the side of the boats centre line (21).

If the boat hull (20) is not in line with the central axis (22) of boat trailer (1A) then the force applied to boat hull (20) moves boat (18) so as to align its centre line (21) with the central axis (22) of the trailer (1A).

The shape and/or width of boat hull (20) which varies along its length. As boat (18) moves onto the trailer (1A) the boat hull (20) applies pressure to roller assemblies at different angles. This causes roller assemblies (2, 3) to pivot around pivot points (6). Inner end (7) of roller assemblies (2, 3) moves upwards while outer ends (8) pivot downwards.

This changes the orientation of the roller assemblies (2, 3) with respect to each other.

The change in orientation of the roller assemblies (2, 3) as the boat hull (20) moves onto trailer (1A) and is best seen in Figures 4A - 4C.

The change in angle ensures that the roller assemblies (2, 3) are better able to engage the surface of the boat hull (20) as that moves onto trailer (1A). Accordingly, the roller assemblies (2, 3) are better able to transfer rotation of force to the boat. This may assist in loading and unloading of the boat onto the trailer.

The roller assemblies (2, 3) continue rotating until the boat is moved entirely onto the trailer (1A).

Boat hull (20) has plaining lines (23) which extend along its length. If the rollers (9) contact the plaining lines then the rollers (9) can deform (bend) around the plaining lines (23). This is achieved by the overhang (16) providing the roller (9) with a degree of flexibility.

The rollers (9) deforming helps to ensure that the roller assemblies (2, 3) can maintain contact with the boat hull. This is important in ensuring that the loading mechanisms (1) can apply sufficient force to the boat hull to move it onto the trailer (1A).

The inventors have found that one of the most difficult aspects of loading a boat onto a trailer is moving the boat (18) when it is substantially out of the water e.g. getting the last 1 - 2 metres of the boat (18) onto the trailer (1A). At this stage, all of the boat's weight is bearing on the roller assemblies (2, 3).

The hydraulic pump (12) is disengaged so that roller assemblies (2, 3) stop rotating.

To unload the boat from the trailer (1A) the remote sends a signal to the pump (12). The pump forces hydraulic fluid through the drive motors (11) in a direction which causes the drive motor (11) to rotate axle (10) in an appropriate direction. Rotation of axle (10) causes rollers (9) to rotate in a corresponding manner. The rollers (9) apply force to boat hull (20) to move boat (18) with respect to the trailer (1A) and into body of water (17).

It should be appreciated that the present invention has a number of advantages over the prior art.

The roller assemblies being laterally spaced across the width of the boat trailer (1A) is important. Due to this configuration, the roller assemblies (2, 3) are in-use on either side of the boat's centre line. Therefore, the roller assemblies (2, 3) are able to provide an aligning mechanism to move a boat into an optimum position to be loaded onto the trailer.

In addition, this enables the roller assemblies to move effectively transfer force to the boat hull so as to load and unload the boat onto the trailer (1A).

That the roller assemblies are able to move relative to each other also helps them to maintain contact with the boat hull. Again, this is important in helping the roller assemblies (2, 3) to transfer force to and thereby move the boat hull.

The configuration and properties of the rollers may also important in ensuring that the invention is successful. The inventors have identified the particular ranges of hardness as providing particular advantages.

Other advantages may include but are not limited to:
- Being cost effective to manufacture;
- Reliable and less prone to mechanical failure than existing boat trailer mechanisms;
- Can be easily retrofitted to existing boat trailers;
- Can be easily adapted to work with boats of different sizes, shapes, and dimensions.

Aspects of the present invention have been described by way of example only and it should be appreciated that modifications and additions may be made thereto without departing from the invention as defined in the appended claims.

## Claims

1. A loading mechanism (1), including
a first roller assembly (2) comprising at least one roller (9) having a longitudinal axis (Y);
a second roller assembly (3) comprising at least one roller (9) having a longitudinal axis (Y);
at least one mounting configured to pivotally engage with the first roller assembly (2) and second roller assembly (3) so as to allow the orientation of the longitudinal axis (Y) of said at least one roller (9) of the first roller assembly (2) to change and to allow the orientation of the longitudinal axis (Y) of said at least one roller (9) of the second roller assembly (3) to change; and,
a drive mechanism, wherein the drive mechanism comprises:
a hydraulic drive motor (11) connected to the at least one roller (9) of the first roller assembly (2), and a second hydraulic drive motor (11) connected to at least one roller (9) of the second roller assembly (3)
a hydraulic pump (12) connected to the hydraulic drive motors (11),
wherein operation of the hydraulic pump (12) causes the drive motors (11) to rotate and thereby rotate the rollers (9) of the first and second roller assemblies (2, 3) about their longitudinal axis (Y) to move an object, wherein
as the weight of the object applies pressure to the roller (9) of at least one of the first and second roller assemblies (2, 3) the at least one mounting allows said rollers (9) to move so as to change the angle between the longitudinal axis (Y) of the rollers (9) of the first and second roller assemblies (2, 3).

2. The loading mechanism (1) as claimed in claim 1, including a cradle having a forward end, a backward end, and a centre line, wherein the first roller assembly (2) and the second roller assembly (3) are positioned at or substantially towards the backward end of the cradle.

3. The loading mechanism (1) as claimed in either one of claims 1 or 2, wherein at least one of the first roller assembly (2) and second roller assembly (3) includes an axle (10).

4. The loading mechanism (1) as claimed in any one of claims 1 to 3, wherein the drive mechanism is configured to rotate the first roller assembly (2) and the second roller assembly (3) at a rate of between 6 to 15 revolutions per minute.

5. The loading mechanism (1) as claimed in any one of claims 1 to 4, wherein the mounting is configured to move the first roller assembly (2) and the second roller assembly (3) to a default position wherein the default position is a V shape when viewed along a centre line of the mounting.

6. The loading mechanism (1) as claimed in any one of claims 1 to 5, wherein the roller(s) (9) have an overhang (16).

7. The loading mechanism (1) as claimed in any one of claims 1 to 6 wherein the roller(s) (9) have a shore hardness in the range of 40 to 80.

8. A trailer (1A) including a loading mechanism (1) as claimed in any one of claims 1 to 7.

9. A loading method, wherein the method uses a loading mechanism (1) as claimed in any one of claims 1 to 7, wherein the method includes the steps of:
engaging the drive mechanism to rotate the first and second roller assemblies (2, 3) so as to move an object
and wherein the weight of the object applies pressure to the roller (9) of at least one of the first and second roller assemblies (2, 3) to cause said roller (9) to move and thereby change the orientation between the longitudinal axis (Y) of the rollers (9) of the first and second roller assemblies (2, 3).

10. A kitset of parts which when assembled provide a loading mechanism (1) as claimed in claim 1, including
a first roller assembly (2) comprising at least one roller (9) having a longitudinal axis (Y);
a second roller assembly (3) comprising at least one roller (9) having a longitudinal axis (Y);
at least one mounting configured to pivotally engage with the first roller assembly (2) and the second roller assembly (3) so as to allow the orientation of the longitudinal axis (Y) of said at least one roller (9) of the first roller assembly (2) to change and to allow the orientation of the longitudinal axis (Y) of said at least one roller (9) of the second roller assembly (3) to change; and,
a drive mechanism comprising a hydraulic drive motor (11), a second hydraulic motor (11) and a hydraulic pump (12), and wherein the hydraulic drive motor (11) is configured to be connected to the first roller assembly (2) and the hydraulic pump (12), and the second hydraulic motor (11) is configured to be connected to the second roller assembly (3) and the hydraulic pump (12), and wherein in use operation of the hydraulic pump (12) causes the hydraulic drive motor (11) and second hydraulic drive motor (11) to rotate to thereby rotate the rollers (9) of the first and second roller assemblies (2, 3) about their longitudinal axis (Y) to move an object, wherein as the weight of the object applies pressure to the roller (9) of at least one of the first and second roller assemblies (2, 3) the at least one mounting allows said rollers (9) to move so as to change the angle between the longitudinal axis (Y) of the rollers (9) of the first and second roller assemblies (2, 3).

11. The kitset as claimed in claim 10, wherein the first roller assembly (2) and/or second roller assembly (3) comprises an axle (10).

12. The kitset as claimed in either one of claims 10 or 11, wherein the mounting is configured to pivotally secure the first roller assembly (2) to a trailer (1A).

13. The kitset as claimed in any one of claims 10 to 12, wherein the mounting is configured to pivotally secure the second roller assembly (3) to a trailer (1A).

14. The kitset as claimed in any one of claims 10 to 13 which when assembled provide a loading mechanism (1) as claimed in any one of claims 2 to 7.

## Patentansprüche

1. Lademechanismus (1), umfassend
eine erste Rollenanordnung (2), die mindestens eine Rolle (9) mit einer Längsachse (Y) umfasst;
eine zweite Rollenanordnung (3), die mindestens eine Rolle (9) mit einer Längsachse (Y) umfasst;
mindestens eine Halterung, die dazu eingerichtet ist, schwenkbar mit der ersten Rollenanordnung (2) und der zweiten Rollenanordnung (3) in Eingriff zu kommen, um die Ausrichtung der Längsachse (Y) der mindestens einen Rolle (9) der ersten Rollenanordnung (2) zu ändern und die Ausrichtung der Längsachse (Y) der mindestens einen Rolle (9) der zweiten Rollenanordnung (3) zu ermöglichen; und
einen Antriebsmechanismus, wobei der Antriebsmechanismus umfasst:
einen hydraulischen Antriebsmotor (11), der mit der mindestens einen Rolle (9) der ersten Rollenanordnung (2) verbunden ist, und einen zweiten hydraulischen Antriebsmotor (11), der mit mindestens einer Rolle (9) der zweiten Rollenanordnung (3) verbunden ist,
eine Hydraulikpumpe (12), die mit den hydraulischen Antriebsmotoren (11) verbunden ist,
wobei der Betrieb der Hydraulikpumpe (12) bewirkt, dass sich die Antriebsmotoren (11) drehen und dadurch die Rollen (9) der ersten und zweiten Rollenanordnung (2, 3) um ihre Längsachse (Y) drehen, um ein Objekt zu bewegen,
wobei wenn das Gewicht des Objekts Druck auf die Rolle (9) von mindestens einer der ersten und zweiten Rollenanordnung (2, 3) ausübt, die mindestens eine Halterung die Bewegung der Rollen (9) ermöglicht, um den Winkel zwischen der Längsachse (Y) der Rollen (9) der ersten und zweiten Rollenanordnung (2, 3) zu ändern.

2. Lademechanismus (1) nach Anspruch 1, umfassend eine Halterung mit einem vorderen Ende, einem hinteren Ende und einer Mittellinie, wobei die erste Rollenanordnung (2) und die zweite Rollenanordnung (3) an oder im Wesentlichen zum hinteren Ende der Halterung hin positioniert sind.

3. Lademechanismus (1) nach einem der Ansprüche 1 oder 2, wobei mindestens eine der ersten Rollenanordnung (2) und der zweiten Rollenanordnung (3) eine Achse (10) umfasst.

4. Lademechanismus (1) nach einem der Ansprüche 1 bis 3, wobei der Antriebsmechanismus dazu eingerichtet ist, die erste Rollenanordnung (2) und die zweite Rollenanordnung (3) mit einer Drehzahl zwischen 6 und 15 Umdrehungen pro Minute zu drehen.

5. Lademechanismus (1) nach einem der Ansprüche 1 bis 4, wobei die Halterung dazu eingerichtet ist, die erste Rollenanordnung (2) und die zweite Rollenanordnung (3) in eine Standardposition zu bewegen, wobei die Standardposition entlang einer Mittellinie der Halterung gesehen eine V-Form ist.

6. Lademechanismus (1) nach einem der Ansprüche 1 bis 5, wobei die Rolle(n) (9) einen Überstand (16) aufweist/aufweisen.

7. Lademechanismus (1) nach einem der Ansprüche 1 bis 6, wobei die Rolle(n) (9) eine Shorehärte im Bereich von 40 bis 80 aufweist/aufweisen.

8. Anhänger (1A) mit einem Lademechanismus (1) gemäß einem der Ansprüche 1 bis 7.

9. Ladeverfahren, wobei das Verfahren einen Lademechanismus (1) gemäß einem der Ansprüche 1 bis 7 verwendet, wobei das Verfahren die folgenden Schritte umfasst:
Einrasten des Antriebsmechanismus, um die erste und zweite Rollenanordnung (2, 3) zu drehen, um ein Objekt zu bewegen,
und wobei das Gewicht des Objekts Druck auf die Rolle (9) von mindestens einer der ersten und zweiten Rollenanordnung (2, 3) ausübt, um zu bewirken, dass sich die Rolle (9) bewegt und dadurch die Ausrichtung zwischen der Längsachse (Y) der Rollen (9) der ersten und zweiten Rollenanordnung (2, 3) ändert.

10. Bausatz von Teilen, die im zusammengebauten Zustand einen Lademechanismus (1) nach Anspruch 1 bereitstellen, umfassend
eine erste Rollenanordnung (2), die mindestens eine Rolle (9) mit einer Längsachse (Y) umfasst;
eine zweite Rollenanordnung (3), die mindestens eine Rolle (9) mit einer Längsachse (Y) umfasst;
mindestens eine Halterung, die dazu eingerichtet ist, schwenkbar mit der ersten Rollenanordnung (2) und der zweiten Rollenanordnung (3) in Eingriff zu kommen, um die Ausrichtung der Längsachse (Y) der mindestens einen Rolle (9) der ersten Rollenanordnung (2) zu ändern und die Ausrichtung der Längsachse (Y) der mindestens einen Rolle (9) der zweiten Rollenanordnung (3) zu ermöglichen; und einen Antriebsmechanismus, der einen hydraulischen Antriebsmotor (11), einen zweiten Hydraulikmotor (11) und eine Hydraulikpumpe (12) umfasst, und wobei der hydraulische Antriebsmotor (11) dazu eingerichtet ist, mit der ersten Rollenanordnung (2) und der Hydraulikpumpe (12) verbunden zu sein, und der zweite Hydraulikmotor (11) dazu eingerichtet ist, mit der zweiten Rollenanordnung (3) und der Hydraulikpumpe (12) verbunden zu sein, und wobei im Einsatz der Betrieb der Hydraulikpumpe (12) das Drehen des hydraulischen Antriebsmotors (11) und des zweiten hydraulischen Antriebsmotors (11) bewirkt, um dadurch die Rollen (9) der ersten und zweiten Rollenanordnung (2, 3) um ihre Längsachse (Y) zu drehen, um ein Objekt zu bewegen, wobei, wenn das Gewicht des Objekts Druck auf die Rolle (9) von mindestens einer der ersten und zweiten Rollenanordnung (2, 3) ausübt, die mindestens eine Halterung es den Rollen (9) ermöglicht, sich zu bewegen, um den Winkel zwischen der Längsachse (Y) der Rollen (9) der ersten und zweiten Rollenanordnung (2, 3) zu ändern.

11. Bausatz nach Anspruch 10, wobei die erste Rollenanordnung (2) und/oder die zweite Rollenanordnung (3) eine Achse (10) umfasst/umfassen.

12. Bausatz nach einem der Ansprüche 10 oder 11, wobei die Halterung dazu eingerichtet ist, die erste Rollenanordnung (2) schwenkbar an einem Anhänger (1A) zu befestigen.

13. Bausatz nach einem der Ansprüche 10 bis 12, wobei die Halterung dazu eingerichtet ist, die zweite Rollenanordnung (3) schwenkbar an einem Anhänger (1A) zu befestigen.

14. Bausatz nach einem der Ansprüche 10 bis 13, der im zusammengebauten Zustand einen Lademechanismus (1) nach einem der Ansprüche 2 bis 7 bereitstellt.

## Revendications

1. Mécanisme de chargement (1), comprenant:
un premier ensemble de rouleaux (2) comprenant au moins un rouleau (9) présentant un axe longitudinal (Y);
un second ensemble de rouleaux (3) comprenant au moins un rouleau (9) présentant un axe longitudinal (Y);
au moins une monture configurée de manière à s'engager de façon pivotante avec le premier ensemble de rouleaux (2) et le second ensemble de rouleaux (3) de manière à permettre de modifier l'orientation de l'axe longitudinal (Y) dudit au moins un rouleau (9) du premier ensemble de rouleaux (2) et à permettre de modifier l'orientation de l'axe longitudinal (Y) dudit au moins un rouleau (9) du second ensemble de rouleaux (3); et
un mécanisme d'entraînement, dans lequel le mécanisme d'entraînement comprend:
un moteur d'entraînement hydraulique (11) connecté audit au moins un rouleau (9) du premier ensemble de rouleaux (2), et un second moteur d'entraînement hydraulique (11) connecté audit au moins un rouleau (9) du second ensemble de rouleaux (3); et
une pompe hydraulique (12) connectée aux moteurs d'entraînement hydrauliques (11),
dans lequel le fonctionnement de la pompe hydraulique (12) amène les moteurs hydrauliques (11) à tourner et de ce fait à faire tourner les rouleaux (9) les premier et second ensembles de rouleaux (2, 3) autour de leur axe longitudinal (Y) afin de déplacer un objet, et
dans lequel, lorsque le poids de l'objet applique une pression au rouleau (9) d'au moins un des premier et second ensembles de rouleaux (2, 3), ladite au moins une monture permet auxdits rouleaux (9) de se déplacer de manière à modifier l'angle entre l'axe longitudinal (Y) des rouleaux (9) des premier et second ensembles de rouleaux (2, 3).

2. Mécanisme de chargement (1) selon la revendication 1, comprenant un berceau présentant une extrémité avant, une extrémité arrière et un axe médian, dans lequel le premier ensemble de rouleaux (2) et le second ensemble de rouleaux (3) sont positionnés au niveau ou sensiblement en direction de l'extrémité arrière du berceau.

3. Mécanisme de chargement (1) selon l'une ou l'autre des revendications 1 ou 2, dans lequel au moins un du premier ensemble de rouleaux (2) et du second ensemble de rouleaux (3) comprend un essieu (10).

4. Mécanisme de chargement (1) selon l'une quelconque des revendications 1 à 3, dans lequel le mécanisme d'entraînement est configuré de manière à faire tourner le premier ensemble de rouleaux (2) et le second ensemble de rouleaux (3) à une vitesse comprise entre 6 et 15 tours par minute.

5. Mécanisme de chargement (1) selon l'une quelconque des revendications 1 à 4, dans lequel la monture est configurée de manière à déplacer le premier ensemble de rouleaux (2) et le second ensemble de rouleaux (3) vers une position par défaut, dans lequel la position par défaut est une forme de V lorsque l'on regarde le long d'un axe médian de la monture.

6. Mécanisme de chargement (1) selon l'une quelconque des revendications 1 à 5, dans lequel le(s) rouleau(x) (9) présente(nt) un surplomb (16).

7. Mécanisme de chargement (1) selon l'une quelconque des revendications 1 à 6, dans lequel le(s) rouleau(x) (9) présente(nt) une dureté de Shore comprise dans la gamme de 40 à 80.

8. Remorque (1A) comprenant un mécanisme de chargement (1) selon l'une quelconque des revendications 1 à 7.

9. Procédé de chargement, dans lequel le procédé utilise un mécanisme de chargement (1) selon l'une quelconque des revendications 1 à 7, dans lequel le procédé comprend les étapes suivantes:
engager le mécanisme d'entraînement afin de faire tourner les premier et second ensembles de rouleaux (2, 3) de manière à déplacer un objet, et
dans lequel le poids de l'objet applique une pression au rouleau (9) d'au moins un des premier et second ensembles de rouleaux (2, 3) afin d'amener ledit rouleau (9) à se déplacer et à modifier de ce fait l'orientation entre l'axe longitudinal (Y) des rouleaux (9) des premier et seconds ensembles de rouleaux (2, 3).

10. Kit de pièces qui, lorsqu'elles sont assemblées, forment un mécanisme de chargement (1) selon la revendications 1, comprenant:
un premier ensemble de rouleaux (2) comprenant au moins un rouleau (9) présentant un axe longitudinal (Y);
un second ensemble de rouleaux (3) comprenant au moins un rouleau (9) présentant un axe longitudinal (Y);
au moins une monture configurée de manière à s'engager de façon pivotante avec le premier ensemble de rouleaux (2) et le second ensemble de rouleaux (3) de manière à permettre de modifier l'orientation de l'axe longitudinal (Y) dudit au moins un rouleau (9) du premier ensemble de rouleaux (2) et à permettre de modifier l'orientation de l'axe longitudinal (Y) dudit au moins un rouleau (9) du second ensemble de rouleaux (3); et
un mécanisme d'entraînement comprenant un moteur d'entraînement hydraulique (11), un second moteur hydraulique (11) et une pompe hydraulique (12), et dans lequel le moteur d'entraînement hydraulique (11) est configuré de manière à être connecté au premier ensemble de rouleaux (2) et à la pompe hydraulique (12), et le second moteur hydraulique (11) est configuré de manière à être connecté au second ensemble de rouleaux (3) et à la pompe hydraulique (12), et dans lequel, lors de l'utilisation, le fonctionnement de la pompe hydraulique (12) amène le moteur d'entraînement hydraulique (11) et le second moteur d'entraînement hydraulique (11) à tourner, faisant de ce fait tourner les rouleaux (9) des premier et second ensembles de rouleaux (2, 3) autour de leur axe longitudinal (Y) afin de déplacer un objet, dans lequel, lorsque le poids de l'objet applique une pression au rouleau (9) d'au moins un des premier et second ensembles de rouleaux (2, 3), ladite au moins une monture permet auxdits rouleaux (9) de se déplacer de manière à modifier l'angle entre l'axe longitudinal (Y) des rouleaux (9) des premier et second ensembles de rouleaux (2, 3).

11. Kit selon la revendication 10, dans lequel le premier ensemble de rouleaux (2) et/ou le second ensemble de rouleaux (3) comprend(-nent) un essieu (10).

12. Kit selon l'une ou l'autre des revendications 10 ou 11, dans lequel la monture est configurée de manière à fixer de façon pivotante le premier ensemble de rouleaux (2) à une remorque (1A).

13. Kit selon l'une quelconque des revendications 10 à 12, dans lequel la monture est configurée de manière à fixer de façon pivotante le second ensemble de rouleaux (3) à une remorque (1A).

14. Kit selon l'une quelconque des revendications 10 à 13 qui, lorsqu'il est assemblé, forme un mécanisme de chargement (1) selon l'une quelconque des revendications 2 à 7.
